# EUROPÄISCHE PATENTSCHRIFT

(11) **EP 0 570 691 B1**
(45) Veröffentlichungstag und Bekanntmachung des Hinweises auf die Patenterteilung: **19.06.1996**
(21) Anmeldenummer: 93105551.1
(22) Anmeldetag: 03.04.1993
(51) Int. Cl.: A47J 43/08

(54) **Mehrzweckküchenmaschine**
Multi-purpose food processor
Robot de cuisine universel

(30) Priorität: 11.05.1992 DE 4215399
(43) Veröffentlichungstag der Anmeldung: 24.11.1993
(73) Patentinhaber: Braun Aktiengesellschaft, Frankfurt am Main (DE)
(72) Erfinder: Börger, Georg, W-6347 Steinbach (DE); Kamprath, Karl-Heinz, W-6200 Wiesbaden (DE)

(56) Entgegenhaltungen:
- DE-C- 4 205 422
- US-A- 1 823 314
- US-A- 2 755 900
- US-A- 2 917 929
- US-A- 4 071 789
- US-A- 4 422 343

## Beschreibung

Die Erfindung betrifft eine Mehrzweckküchenmaschine nach dem Oberbegriff des Anspruchs 1.

Eine derartige Mehrzweckküchenmaschine ist Aus der US-PS 1,823,314 ist bereits eine Mehrzweckküchenmaschine bekannt, bei der aus einem Gerätesockel zwei Abtriebswellen herausragen, die ineinander konzentrisch gelagert sind. Die innere Abtriebswelle ist über eine erste Kupplung mit einer ersten Gegenkupplung kuppelbar, wobei letztere Teil einer in einem rohrförmigen Schaft eines ersten Arbeitsbehälters gelagerten ersten Welle ist, die eine Schlageinrichtung zum Bearbeiten von Nahrungsmitteln trägt. Die äußere Abtriebswelle ist über eine zweite Kupplung mit einer zweiten Gegenkupplung kuppelbar, wobei letztere Teil einer in einem rohrförmigen Schaft eines zweiten Arbeitsbehälters gelagerten zweiten Welle ist, die einen Zitruskegel zum Auspressen von Zitrusfrüchten aufweist. Bei dieser Mehrzweckküchenmaschine weisen die an den beiden Abtriebswellen ausgebildeten Kupplungen nur einen geringen Bauraum für die Unterbringung der Verzahnungen auf, so daß diese zum einen höheren Belastungen im Dauerbetrieb nicht standhalten können und zum anderen den Einkuppelvorgang nur mit gezielter Ausrichtung der Verzahnungen zueinander ermöglichen. Durch die in der Höhe voneinander abweichenden Kupplungsebenen ergibt sich zwangsweise in axialer Richtung ein erhöhter Einbauraum.

Es ist weiterhin aus der DE-OS 22 58 711 ein Mixer für Nahrungsmittel und Getränke mit einem Arbeitsbehälter bekannt, in dessen Behälterboden in einer Bohrung eine Lagerbuchse zur drehbaren Lagerung einer durch den Behälterboden hindurchgeführten Werkzeugwelle angeordnet ist. Das eine Ende der Werkzeugwelle ist mit einem Werkzeug fest verbunden und das andere Ende der Werkzeugwelle ist mit einer Gegenkupplung versehen, die über eine Kupplung mit einem Antriebsmotor verbindbar ist. Bei dieser bekannten Küchenmaschine kann die Drehzahl der Werkzeugwelle nicht variiert werden.

Aus der US-A-4,422,343 ist weiterhin eine der eingangs genannten Küchenmaschine bekannt. Bei dieser Küchenmaschine sind die zwei konzentrisch zueinander verlaufenden Abtriebswellen mit je einer Kupplungshälfte versehen, die mit am Außenumfang angeordneten Verzahnungen ausgebildet sind. Die Kupplungshälften sind in axialer Richtung hintereinander angeordnet.

Der Erfindung liegt die Aufgabe zugrunde, eine Mehrzweckküchenmaschine der eingangs genannten Art zu schaffen, bei der die mit unterschiedlichen Drehzahlen angetriebenen Kupplungen bei engstem Bauraum dennoch äußerst stabil ausgeführt sind und bei der gleichzeitig der Einkuppelvorgang beim Aufsetzen des Arbeitsbehälters selbsttätig erfolgt.

Diese Aufgabe wird erfindungsgemäß durch die kennzeichnenden Merkmale des Anspruchs 1 gelöst.

Durch die Aneinanderreihung von übereinander angeordneten, mit jeweils Im Durchmesser größer werdenden Ringen, auf denen jeweils konzentrisch zueinander verlaufend, die Verzahnungen nach oben hervorragen, ergeben sich besonders großflächige Ringe zur Anbringung von einer Vielzahl dieser Verzahnungen, so daß auf dennoch kleinstem Bauraum ein dauerhafter und drehmomentenstarker Verzahnungseingriff entsteht, der auch hohe Drehzahlen schadlos überträgt.

Besonders vorteilhaft ist es, wenn die Rotationsflächen der Kupplungen und Gegenkupplungen als Mantelfläche eines Kegelstumpfes ausgebildet sind. Durch diese Gestaltung wird eine besonders raumsparende Schachtelung der Kupplungshälften der Abtriebswellen ermöglicht. Dabei greifen die den Werkzeugwellen zugeordneten Kupplungshälften in den Einbauraum im Fuß des Rohransatzes eines Arbeitsbehälters besonders gut ein, wenn der Rohransatz im Fuß ebenfalls konisch ausgebildet ist. Durch den Verlauf der Mantelflächen der Ringe als Kegelstumpf weisen die Verzahnungen größere Übertragungsflächen auf, so daß die Flächenpressung bei der Drehmomentübertragung verringert wird. Durch die größeren Übertragungsflächen werden auch die am Fuß der einzelnen Zähne beanspruchten Querschnitte größer, was zu einer höheren Festigkeit der Kupplungen und Gegenkupplungen führt. Gleichzeitig lassen sich die Gegenkupplungen leichter in die Kupplungen einkuppeln.

In einer Weiterbildung der Erfindung ist vorgesehen, daß die Zähne der Kupplungen auf der konvex gekrümmten Außenseite der Rotationsflächen und die Zähne der Gegenkupplungen auf der konkav gekrümmten Innenseite der Rotationsflächen angeordnet sind. Durch diese Anordnung wird zusätzlich noch die Gegenkupplung auf der zugehörigen Kupplung besser zentriert, was zur Verschleißminderung der Kupplung und letztendlich auch zu einem ruhigeren Lauf und geringeren Lagerverschleiß der Mehrzweckküchenmaschine führt.

Vorzugsweise sind die Kupplungen und Gegenkupplungen als axial einrückbare Klauen- oder Stirnzahnkupplungen ausgebildet. Bei Stirnzahnkupplungen ist es zweckmäßig, wenn die Kupplungshälften auf einer sich im wesentlichen radial erstreckenden Rotationsfläche in gleichem Abstand von der Drehachse und in gleichem Abstand voneinander drei oder mehr Zähne haben, deren Übertragungsflächen für das Drehmoment in radialen, die Drehachse enthaltenden Ebenen liegen. Hierdurch wird eine selbsttätige Zentrierung der Kupplungshälften zueinander erreicht und trennende Axialkräfte, die die Kupplungshälften voneinander trennen können, indem der Arbeitsbehälter vom Gerätesockel abhebt, werden vermieden. Um das Einrücken der Kupplungshälften weiter zu erleichtern, kann nach einem weiteren Vorschlag der Erfindung vorgesehen sein, daß die Zähne der Kupplungshälften in tangentialer Richtung die Querschnittsform eines rechtwinkligen Dreiecks haben, dessen rechter Winkel sich am Fuß der Übertragungsflächen der Zähne befindet.

Zur Verringerung der Baugröße der Kupplung der Küchenmaschine trägt nach einem weiteren Vorschlag der Erfindung bei, daß die innenliegende Kupplungshälfte die höhere Abtriebsdrehzahl überträgt. Dabei überträgt dann die im Durchmesser kleinere Kupplung auch das kleinere Drehmoment, so daß aufgrund der geringeren Belastung die im Querschnitt zwangsweise kleineren Zähne nicht überbeansprucht werden.

Um eine sichere Lagerung der im Arbeitsbehälter befindlichen Arbeitswerkzeuge wie der Gegenkupplung zu erreichen, ist es vorteilhaft, daß die Kraftübertragung zwischen Gegenkupplung und Arbeitswerkzeug jeweils durch eine in dem betreffenden Arbeitsbehälter gelagerte Werkzeugwelle erfolgt.

Erfindungsgemäß ist die Werkzeugwelle in einem Rohransatz gelagert und abgedichtet, der sich von dem Boden des jeweiligen Arbeitsbehälters bis etwa zur halben Füllhöhe in den Behälterinnenraum hinein erstreckt. Durch die lange Führung der Werkzeugwelle im Rohransatz wird eine stabile Lagerung des eingesetzten Arbeitswerkzeuges erreicht. Dies ist insbesondere bei der Verwendung eines Knethakens wichtig, da hier bei der Verarbeitung von schweren Teigen hohe Belastungen im Lagerbereich auftreten.

Auch ist es vorteilhaft, wenn der Rohransatz einen Fuß aufweist, der sich zum Behälterboden hin kegelig erweitert und wenn in dieser Erweiterung die Gegenkupplungen zum Ankuppeln der Werkzeugwelle an die Abtriebswelle angeordnet ist. Diese Ausgestaltung führt zu einer vorteilhaften Versteifung des Rohransatzes und erhöht die Festigkeit im Bereich des Übergangsquerschnitts zwischen Behälterboden und Rohransatz. Weiterhin wird durch die Anordnung der Gegenkupplung in der Erweiterung des Rohransatzes die Bauhöhe der Küchenmaschine vorteilhaft reduziert. Gleichzeitig wird erreicht, daß der Boden des jeweiligen Arbeitsbehälters bündig an dem eben ausgebildeten Gerätesockel anliegt, wodurch eine sichere Lagerung des Arbeitsbehälters auf dem Gerätesockel erreicht wird.

Es ist vorteilhaft, daß beim Aufsetzen des jeweiligen Arbeitsbehälters auch die erste und zweite Kupplung in die Erweiterung hineinragt. Hierdurch verringert sich die Bauhöhe von Gerätesockel und Arbeitsbehälter.

Die Kupplungshälften können nach einem weiteren Vorschlag der Erfindung im Spritzverfahren aus Kunststoff hergestellt sein, wobei die Klauen oder Zähne auf ihrer der Rotationsfläche zugekehrten Seite durch in der Spritzform gebildete Kernteile Ausnehmungen hervorrufen. Durch diese Ausnehmungen wird die Wandstärke im Bereich der Klauen oder Zähne reduziert, um Verformungen und Risse durch Lunkerbildung bei der Herstellung der Zähne zu vermeiden, ohne daß dabei die Festigkeit der Zähne nennenswert herabgesetzt wird.

Zur Dämpfung von Geräuschen und zum Ausgleich von Herstellungstoleranzen kann erfindungsgemäß weiterhin vorgesehen sein, daß jeweils eine von zwei zusammenwirkenden Kupplungshälften mit einem schwingungsdämpfenden Überzug aus elastomerem Werkstoff versehen ist. Vor allem für die schnell laufende Kupplung ist ein solcher schwingungsdämpfender Überzug zweckmäßig. Der elastische Überzug hat weiterhin den Vorteil, daß die Gegenkupplung stets spielfrei in die Kupplung eingreift

Die Erfindung wird nachfolgend anhand von Ausführungsbeispielen näher erläutert, die in der Zeichnung dargestellt sind. Es zeigen
- Fig. 1: eine perspektivische Darstellung einer erfindungsgemäßen Küchenmaschine,
- Fig. 2: einen Querschnitt durch die Kupplungshälfte einer langsam laufenden Werkzeugwelle,
- Fig. 3: einen Querschnitt durch die konzentrisch ineinander angeordneten Kupplungshälften der beiden Abtriebswellen der erfindungsgemäßen Küchenmaschine,
- Fig. 4: eine Draufsicht auf die beiden Kupplungshälften gemäß Figur 3,
- Fig. 5: einen Teilschnitt entlang der Linie B-B durch einen Zahn der Kupplungshälfte gemäß Figur 2,
- Fig. 6: eine Teilschnitt entlang der Linie A-A durch einen Zahn der äußeren Kupplungshälfte gemäß Figur 3,
- Fig. 7: einen Teilschnitt entlang der Linie D-D durch einen Zahn der inneren Kupplungshälfte gemäß Figur 3,
- Fig. 8: eine Seitenansicht einer Kupplungshälfte für eine schnell laufende Werkzeugwelle der erfindungsgemäßen Küchenmaschine,
- Fig. 9: einen Querschnitt durch die Kupplungshälfte gemäß der Schnittführung E-E nach Figur 8,
- Fig. 10: einen Teilschnitt entlang der Linie F-F durch einen Zahn der Kupplungshälfte gemäß Figur 9 und
- Fig. 11: einen Querschnitt durch einen Arbeitsbehälter und die Kupplungen einer erfindungsgemäßen Küchenmaschine.

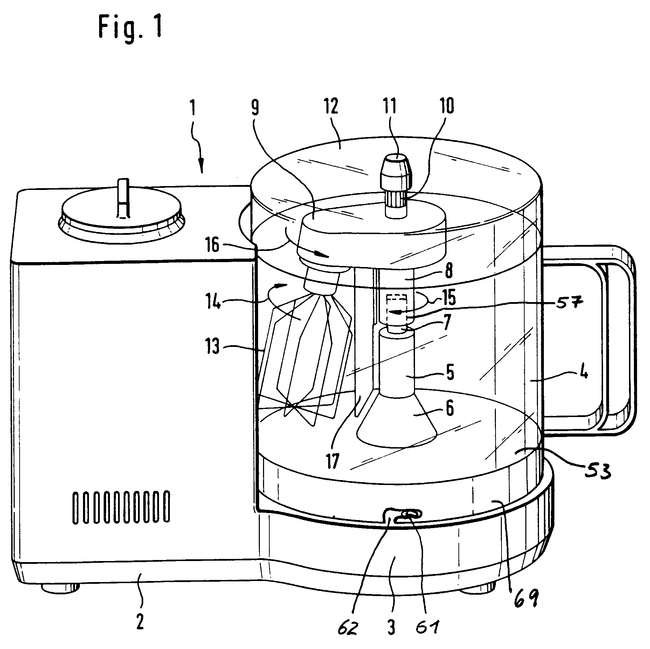

Die in Figur 1 dargestellte Mehrzweckküchenmaschine 1 weist einen Gerätesockel 2 auf, der einen elektrischen Antriebsmotor und ein Getriebe (nicht dargestellt) mit zwei konzentrisch ineinander angeordneten Abtriebswellen 50, 28 trägt, deren Drehachse 51 vertikal verläuft. Auf dem Gerätesockel 2 ist ein Gehäuse 3 mit einem zylindrischen Gehäuseabschnitt zur Aufnahme unterschiedlicher Arbeitsbehälter 4 und einem quaderförmigen Gehäuseabschnitt angeordnet, in dem der Elektromotor (nicht dargestellt) untergebracht ist. Der zylindrische Arbeitsbehälter 4 weist in seinem Zentrum einen Rohransatz 5 auf, der mit einem sich kegelig nach unten erweiternden Fuß 6 fest mit dem Boden des Arbeitsbehälters 4 verbunden ist. Der Arbeitsbehälter ist über am Gehäuse 3 diametral gegenüberliegende Verriegelungszapfen 61, die in bajonettartige Ausnehmungen 62 eingreifen, fest mit dem Gehäuse 3 verriegelbar (Fig. 1).

In dem Rohransatz 5 ist nach Fig. 1 eine Werkzeugwelle 7 drehbar gelagert und abgedichtet, die mit einem Ende oben aus dem Rohransatz 5 herausragt und dort durch eine Steckkupplung 57 mit einer Hohlwelle 8 eines Werkzeuggetriebes 9 drehfest verbunden ist. An dem Werkzeuggetriebe 9 befindet sich koaxial zur Hohlwelle 8 ein Lagerzapfen 10, der an seinem Außenumfang eine Kupplungsverzahnung hat. Der Lagerzapfen 10 greift in eine Kupplungshülse 11 ein und ist durch diese gegen Drehung gesichert.

Die Kupplungshülse 11 wird von einem Deckel 12 gehalten, mit dem der Arbeitsbehälter 4 verschlossen ist. An dem Werkzeuggetriebe 9 befindet sich nach Fig. 1 in einem Abstand von der Hohlwelle 8 ein Schlagbesen 13, der durch eine Drehung der Hohlwelle 8 in Drehung versetzt wird, wobei seine Drehrichtung 14 mit der Drehrichtung 15 der Hohlwelle 8 übereinstimmt. Gleichzeitig führt das Gehäuse des Werkzeuggetriebes 9 eine langsame Drehbewegung um die Hohlwelle 8 in der Drehrichtung 16 aus, so daß der Schlagbesen 13 in dem Arbeitsbehälter 14 ständig im Kreis herumgeführt wird. Ein an dem Werkzeuggetriebe 9 befestigter Abweiser 17 führt dabei das Arbeitsgut aus dem Zentralbereich des Arbeitsbehälters 4 dem Schlagbesen 13 zu. Anstelle des Werkzeuggetriebes 9 mit Schlagbesen 13 sind selbstverständlich auch andere Arbeitswerkzeuge, wie Schlagmesser, Reibscheiben, Knethaken, auf der Werkzeugwelle 7 über den ersten Eingriff 57 kuppelbar.

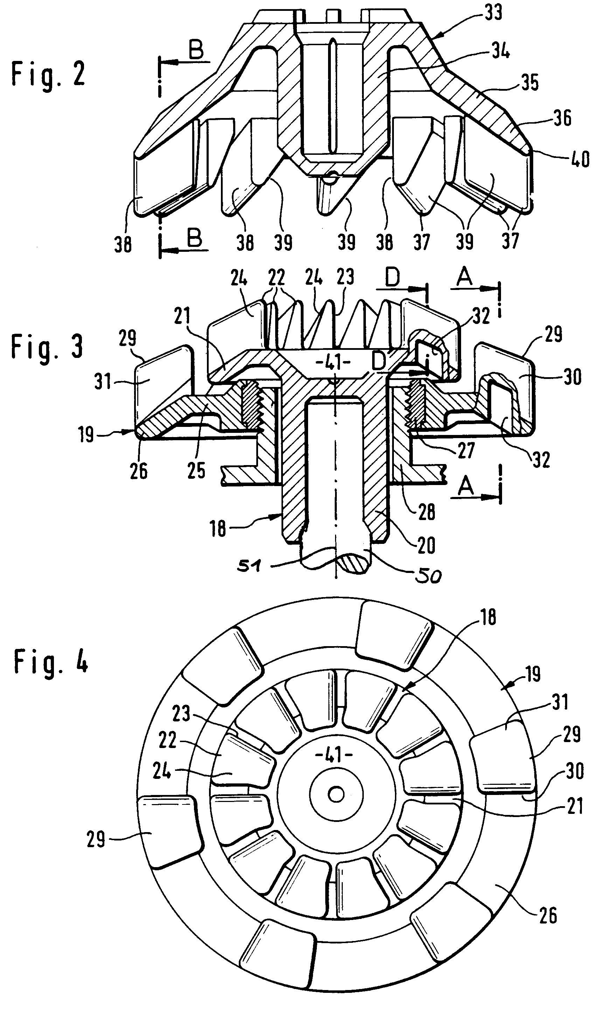

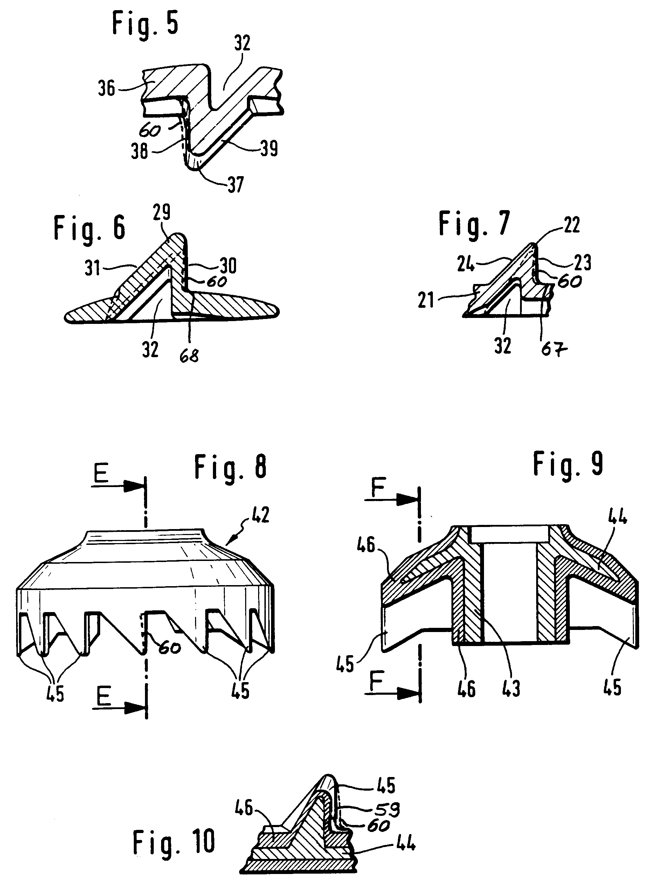

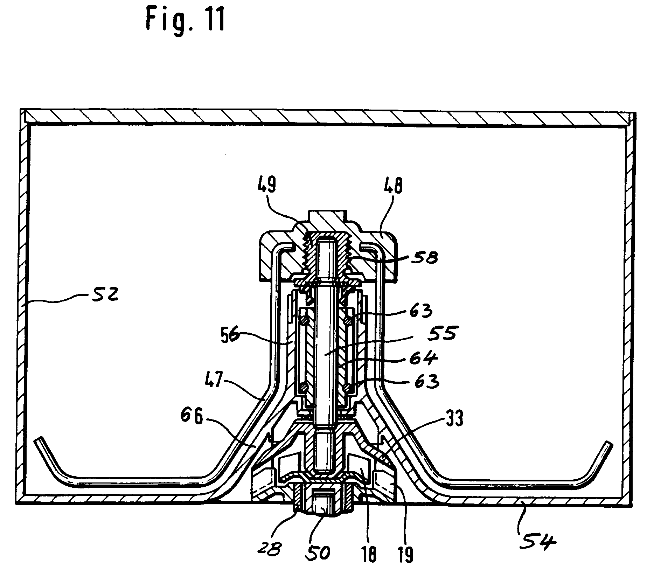

Die Werkzeugwelle 7 ist durch die im Inneren des Fußes 6 angeordnete Stirnzahnkupplungen 42, wie sie In Fig. 8 gezeigt wird, an die Abtriebswelle 50 der Küchenmaschine 1 über die Kupplung 18 kuppelbar. Dies ist zwar aus Fig. 1 nicht ersichtlich, es greift aber gleichermaßen, wie in Fig. 11 die Kupplung 19 in die Gegenkupplung 33 eingreift, in Fig. 1 die Kupplung 18 in die Gegenkupplung 42. Die Abtriebswellen 50, 28 sind koaxial zur Werkzeugwelle 7 und konzentrisch zueinander im Zentrum des zylindri-schen Abschnitts des Gehäuses 3 angeordnet, wie dies zwar nicht aus Fig. 1, aber aus Fig. 3 und 11 ersichtlich wird, allerdings trägt dort die Wekzeugwelle die Positionsnummer 55. Ihre Wellenenden stehen unterhalb des Bodens 53 des Arbeitsbehälters 4 aus dem Gehäuse 3 hervor und sind dort jeweils mit einer Kupplungshälfte 18, 19 von zwei konzentrisch angeordneter Stirnzahnkupplungen drehfest verbunden (Fig. 3).

In den Figuren 3, 4 und 6, 7 sind die aus dem Gerätesockel 3 herausragenden Kupplungshälften 18, 19 der Abtriebswellen 50, 28 im einzelnen dargestellt. Die Kupplungshälfte 18 besteht nach Fig. 3 und 7 aus einer Hülse 20, die auf das Ende der inneren, schneller drehenden Abtriebswelle 50 drehfest aufgesteckt wird. Die Hülse 20 weist an ihrem oberen Ende einen radial nach außen ragenden ersten Ring 21 auf, dessen äußerer Rand die Form eines flachen nach unten sich erweiternden Kegelstumpfes hat. Auf der konvex gekrümmten Außenseite des ersten Ringes 21 sind in regelmäßigem Abstand Zähne 22 angeformt, deren Querschnitt in tangentialer Richtung im wesentlichen die Form eines rechtwinkligen Dreiecks hat, dessen rechter Winkel am Zahnfuß 67 angeordnet ist. Durch die Querschnittsform der Zähne 22 werden Übertragungsflächen 23 und zu diesen geneigte Führungsflächen 24 gebildet. Die Übertragungsflächen 23 liegen in durch die Drehachse 51 gehende Ebenen und dienen zur Übertragung des Drehmoments. Die Führungsflächen 24 sorgen für ein leichtes Einrücken der Kupplung. Die Übertragungsflächen 23, 30, 38 und 59 können auch nach den Figuren 5 bis 7 und 10 zum Fuß des jeweiligen Zahnes 22, 29, 39, 45 hin leicht geneigt sein, wie dies durch die gestrichelten Linien 60 angedeutet ist, wodurch beim Übertragen von Drehmomenten auf die Zähne 39 bzw. 45 keine nach oben auf den Arbeitsbehälter 4, 52 gerichtete Axialkräfte entstehen. Hierdurch wirken auch nahezu keine Axialkräfte auf die Werkzeugwellen 7, 55.

Die zweite Kupplung 19 besteht nach Fig. 3 und 6 aus einem zweiten scheibenförmigen Ring 25 mit einem äußeren kegelstumpfförmigen Rand 26. Die Nabe des zweiten Ringes 25 weist einen Gewindering 27 auf, der auf die hohle, die Hülse 20 umgebende, langsam laufende Abtriebswelle 28 aufgeschraubt ist. Auf der konvex gekrümmten Außenfläche des Randes 26 sind in gleichmäßigem Abstand mehrere Zähne 29 angeordnet, deren Querschnittsform derjenigen der Zähne 22 angepaßt ist. Die Übertragungsflächen 30 für das Drehmoment der Zähne 29 liegen in durch die Drehachse 51 gehenden Ebenen. Zu den Übertragungsflächen 30 geneigte Führungsflächen 31 auf der Rückseite der Zähne 29 erleichtern das Einrücken der Gegenkupplung 33. Auch hier ist der rechte Winkel am Zahnfuß 68 angeordnet.

Die Neigung des kegelstumpfförmigen Kragens 21 und des Randes 26 der Kupplungshälften 18, 19 ist nach Fig. 3 gleich und ihre Außenflächen liegen annähernd auf der gleichen Kegelfläche. Hierdurch ergibt sich eine in axialer Richtung geringe Bauhöhe der beiden Kupplungshälften 18, 19 , wobei der Kragen 21 mit den Zähnen 22 zu einem wesentlichen Teil innerhalb des Kranzes der Zähne 29 Platz findet.

Der Kupplungshälfte 19 ist die in den Figuren 2 und 5 dargestellte, mit der Werkzeugwelle 55 nach Fig. 11 verbindbare Kupplungshälfte 33 zugeordnet. Die Gegenkupplungshälfte 33 weist nach Fig. 2 eine auf das Ende der Werkzeugwelle 55 aufsteckbare Hülse 34 auf, die eine aus kegelstumpfförmigen Ringen gebildete Glocke 35 trägt und die auf der Innenseite der Glocke 35 angeordnet ist. Der äußere kegelstumpfförmige Rand 36 der Glocke 35 ist auf seiner Innenseite mit Zähnen 37 versehen, die komplementär zu den Zähnen 29 (Fig. 3) ausgebildet sind und die Übertragungsflächen 38 (Fig. 5) für das Drehmoment und Führungsflächen 39 haben, die an die Übertragungsflächen 30 und die Führungsflächen 31 angepaßt sind.

Der Rand 36 der Gegenkupplung 33 ist nach Fig. 2 steiler als der Rand 26 der Kupplungshälfte 19, so daß nur seine äußere Kante 40 mit der Stirnkante der Zähne 29 in Eingriff kommen kann. Hierdurch wird sichergestellt, daß zwischen den Zähnen 22 der Kupplungshälfte 18 und der Innenseite der Glocke 35 ein ausreichender Zwischenraum verbleibt, wenn die Kupplungshälften 19, 33 ineinander greifen, so daß die gleichzeitig mit der Kupplungshälfte 19, jedoch mit einer höheren Drehzahl angetriebene Kupplungshälfte 18 sich frei innerhalb der Glocke 35 drehen kann. Der erforderliche Freiraum zwischen der Kupplungshälfte 18 und dem Innenraum der Glocke 35 wird durch eine Einsenkung 41 im Zentrum des Kragens 21 gebildet, an der sich die Hülse 34 der Gegenkupplung 33 abstützt und zentriert.

Die Kupplungshälften 18, 33 und die Scheibe 25 der Kupplungshälfte 19 sind im Spritzverfahren aus einem thermoplastischen Kunststoff hergestellt. Um zu große Wandstärken, die für dieses Herstellverfahren ungünstig sind, zu vermeiden, sind im Innern der Zähne 23, 29, 37 zur Zahnunterseite hin offene Aussparungen 32 vorgesehen.

Die Figuren 8 bis 10 zeigen eine mit der Kupplungshälfte 18 zusammenwirkende Kupplungshälfte 42, wie sie in Fig. 1 mit der Werkzeugwelle 7 verbunden ist. Die Kupplungshälfte 42 besteht aus einer Hülse 43 mit einem kegelstumpfförmigen Kragen 44. Auf der konkav gewölbten Innenseite des Kragens 44 sind in gleichmäßigem Abstand Zähne 45 angeordnet, die in radialer Richtung unmittelbar an die Hülse 43 angrenzen. Die Form der Zähne 45 entspricht der Form der Zwischenräume zwischen den Zähnen 22 der Kupplungshälfte 18, so daß die Kupplungshälfte 42 nahezu spielfrei mit der Kupplungshälfte 18 zusammensteckbar ist. Die außenliegende Oberfläche der Kupplungshälfte 42 und ihrer Zähne 45 wird durch einen Überzug 46 aus einem elastomeren Werkstoff gebildet, der für eine Dämpfung von Schwingungen und von Geräuschen bei der Übertragung von Drehbewegungen mit hoher Drehzahl sorgt. Die Übertragungsfläche 59 legt sich dabei an der Übertragungsfläche 23 (Fig. 7) bündig an.

Figur 11 zeigt einen Arbeitsbehälter 52 mit einem darin angeordneten Knethaken 47, der unmittelbar über eine zweite Steckkupplung 58 durch die zweite Werkzeugwelle 55 angetrieben wird. Hierzu ist der Knethaken 47 mit einer als Steckkupplung ausgebildeten Nabe 48 unmittelbar auf einen am oberen Ende der Werkzeugwelle 55 angeordneten Kupplungszapfen 49 über einen zweiten Eingriff 58 lösbar aufgesteckt. Die Werkzeugwelle 55 bildet somit gleichzeitig Lager und Drehantrieb für den Knethaken 47. Das untere Ende der zweiten Werkzeugwelle 55 ist mit der Kupplungshälfte 33 bestückt, die in die Kupplungshälfte 19 der Küchenmaschine 1 eingreift und dadurch die zweite Werkzeugwelle 55 mit der langsam laufenden Abtriebswelle 28 der Küchenmaschine verbindet. Auch hier erweitert sich der zweite Rohransatz 56 über den Fuß 66 kegelig nach außen bis zum Boden 54 hin. In dem Rohransatz 56 ist über zwei O-Ringe 63 eine Lagerbuchse 64 gelagert, in der sich die zweite Werkzeugwelle 55 dreht.

Soll ein schnell drehendes Werkzeug durch die Werkzeugwelle 55 angetrieben werden, so kann entweder anstelle der Kupplungshälfte 33 die Kupplungshälfte 42 mit der Werkzeugwelle 55 verbunden werden oder es wird der Arbeitsbehälter 52 durch den Arbeitsbehälter 4 nach Fig. 1 vertauscht, dessen Werkzeugwelle 7 mit der Kupplungshälfte 42 fest verbunden ist. Der in Fig. 1 dargestellte Arbeitsbehälter 4 bildet den eigentlichen Food-Prozessor-Topf, mit dem Nahrungsmittel zerkleinert, verrührt, geschlagen, geknetet, gerieben, geraspelt etc. werden können, wobei allerdings die entsprechenden Arbeitswerkzeuge mit höheren Drehzahlen beaufschlagt werden. Der in Fig. 11 dargestellte Arbeitsbehälter 52 eignet sich insbesondere als Knettopf, allerdings können auch hier durch Einsatz anderer Arbeitswerkzeuge die gleichen Arbeiten wie mit einem Food-Prozessor-Topf durchgeführt werden, wobei lediglich die Arbeitswerkzeuge mit geringeren Drehzahlen gegenüber dem Arbeitsbehälter 4 nach Fig. 1 rotieren. Wird die Küchenmaschine nach Fig. 1 zusätzlich zum Arbeitsbehälter 4 mit einem Mixtopf, der insbesondere zum Mixen von Getränken oder zum Zerkleinern von Nüssen, Petersilie etc. dienen soll, ausgerüstet, so wird dieser mit der Kupplungshälfte 42 ausgestattet, der dann beim Aufsetzen auf den Gerätesockel 2 in die schnell drehende Kupplungshälfte 18 (Fig. 3) eingreift.

Wie aus Figur 11 weiterhin zu ersehen ist, eignen sich die beschriebenen Kupplungen 33, 18, 19 für einen platzsparenden Einbau im Innern des Fußes 66 des Arbeitsbehälters 52 und ermöglichen dadurch einen großvolumigen Arbeitsbehälter 52 bei geringer Bauhöhe der Mehrzweckküchenmaschine. Die Ausbildung der Kupplungen 33, 42, 18, 19 als Stirnzahnkupplungen ist, wie bereits beschrieben, selbstzentrierend. Eine genaue Zentrierung des Arbeitsbehälters 52 in Bezug auf die Abtriebswellen 28, 50 der Küchenmaschine wäre daher entbehrlich, was zu einer Vereinfachung der Küchenmaschine und Verringerung der Herstellkosten der Küchenmaschine beitragen würde. Dennoch ist es aus Sicherheitsgründen und ruhigerem Lauf vorteilhaft, wenn der Arbeitsbehälter 4, wie aus Fig. 1 ersichtlich, über die Verriegelungszapfen 61 und eine Zentrierung 69 auf dem Gerätesockel 3 zusätzlich zentriert und fest verriegelt ist.

## Patentansprüche

1. Mehrzweckküchenmaschine mit wenigstens einer ersten (50) und zweiten (28), von einem Elektromotor mit unterschiedlichen Drehzahlen angetriebenen und zueinander konzentrisch in deren Gehäuse (3) gelagerten Abtriebswelle, von denen jede (50, 28) eine Kupplung (18, 19) trägt, wobei die erste Kupplung (18) mit einer ersten (42) und die zweite Kupplung (19) mit einer zweiten (33) Gegenkupplung verbindbar ist, wobei Weiter die erste Gegenkupplung (42) an der Außenseite des Bodens (53) eines ersten Arbeitsbehälters (4) und die zweite Gegenkupplung (33) an der Außenseite des Bodens (54) eines zweiten Arbeitsbehälters (52) angeordnet ist, die ihrerseits jeweils vom Gehäuse (2) abnehmbar sind und die beim Aufsetzen auf das Gehäuse (2) mit ihrer jeweiligen Gegenkupplung (42, 33) über Verzahnungen (45 bzw. 37) in Verzahnungen (22 bzw. 29) der zugehörigen Kupplung (18, 19) eingreifen, wobei in den jeweiligen Arbeitsbehältern (4, 52) Arbeitswerkzeuge (13, 47) zum Bearbeiten von Nahrungsmitteln einsetzbar sind, die über die jeweilige Gegenkupplung (42, 33) angetrieben werden, wobei am oberen, aus dem Gehäuse (2) der Mehrzweckküchenmaschine herausragenden Ende der Abtriebswellen (50, 28) jeweils ein sich nach außen erstrekkender Ring (21, 25) angebracht ist, die in Bezug auf die Abtriebswellen (50, 28) übereinander liegen und verschiedene Durchmesser haben, wobei der dem Gehäuse (3) näher liegende, untere Ring (25) den größeren Durchmesser aufweist,
**dadurch gekennzeichnet**,
daß die Ringe (21, 25) scheibenförmig ausgebildet sind, daß sich von deren Oberseite jeweils nach oben die Verzahnung (22 bzw. 29) der betreffenden Kupplung (18, 19) erstreckt und daß der obere Ring (21) mit seinen Zähnen (22) zu einem wesentlichen Teil innerhalb des Kranzes der Zähne (29) des unteren Ringes (25) Platz findet.

2. Küchenmaschine nach Anspruch 1,
**dadurch gekennzeichnet**,
daß die Rotationsflächen der Kupplungen und Gegenkupplungen (18, 19, 33, 42) als Mantelfläche eines Kegelstumpfs ausgebildet sind.

3. Küchenmaschine nach Anspruch 2,
**dadurch gekennzeichnet,**
daß die Zähne (22, 29) der Kupplungen (18, 19) auf der konvex gekrümmten Außenseite der Rotationsflächen und die Zähne (37, 45) der Gegenkupplungen (33, 42) auf der konkav gekrümmten Innenseite der Rotationsflächen angeordnet sind.

4. Küchenmaschine nach Anspruch 1,
**dadurch gekennzeichnet,**
daß die Kupplungen (18, 19) und Gegenkupplungen (42, 33) als axial zueinander einrückbare Klauen- oder Stirnzahnkupplungen ausgebildet sind.

5. Küchenmaschine nach Anspruch 4,
**dadurch gekennzeichnet,**
daß die Kupplungen (18, 19) und Gegenkupplungen (42, 33) der Stirnzahnkupplungen auf einer sich im wesentlichen radial erstreckenden Rotationsfläche in gleichem Abstand von der Drehachse und in gleichem Abstand voneinander drei oder mehr Zähne (22, 29, 37, 45) haben, deren Übertragungsflächen (23, 30, 38, 59) für das Drehmoment in radialen, die Drehachse enthaltenden Ebenen liegen.

6. Küchenmaschine nach Anspruch 5,
**dadurch gekennzeichnet,**
daß die Zähne (22, 29, 37, 45) der Kupplungshälften in tangentialer Richtung die Querschnittsform eines rechtwinkligen Dreieckes haben, dessen rechter Winkel sich am Fuß der Übertragungsflächen (23, 30, 38, 59) der Zähne befindet.

7. Küchenmaschine nach Anspruch 1,
**dadurch gekennzeichnet,**
daß die innenliegende Kupplung (18) höhere Abtriebsdrehzahlen überträgt.

8. Küchenmaschine nach Anspruch 1,
**dadurch gekennzeichnet,**
daß die Kraftübertragung zwischen Gegenkupplung (42, 33) und Arbeitswerkzeug (13, 47) jeweils durch eine in dem betreffenden Arbeitsbehälter (4, 52) gelagerte Werkzeugwelle (7, 55) erfolgt.

9. Küchenmaschine nach Anspruch 8,
**dadurch gekennzeichnet,**
daß die Werkzeugwelle (7, 55)) in einem Rohransatz (5, 56) gelagert und abgedichtet ist, der sich von dem Boden des jeweiligen Arbeitsbehälters (4, 52) bis etwa zur halben Füllhöhe in den Behälterinnenraum hinein erstreckt.

10. Küchenmaschine nach Anspruch 2,
**dadurch gekennzeichnet,**
daß der Rohransatz (5, 56) einen Fuß (6, 66) aufweist, der sich zum Behälterboden (53, 54) hin keglig erweitert und daß in dieser Erweiterung (6, 66) die Gegenkupplungen (42 bzw. 33) angeordnet sind.

11. Küchenmaschine nach Anspruch 3,
**dadurch gekennzeichnet,**
daß beim Aufsetzen des jeweiligen Arbeitsbehälters (4, 52) auch die erste (18) und zweite (19) Kupplung in die Erweiterung (6, 66) hineinragt.

12. Küchenmaschine nach einem der Ansprüche 2 bis 9,
**dadurch gekennzeichnet,**
daß die Kupplungen und Gegenkupplungen (18, 19, 33, 42) der Stirnzahnkupplungen im Spritzverfahren aus Kunststoff hergestellt sind, wobei die Klauen oder Zähne auf ihrer der Rotationsfläche zugekehrten Seite durch in der Spritzform gebildete Kernteile Ausnehmungen (32) hervorrufen.

13. Küchenmaschine nach einem der vorhergehenden Ansprüche,
**dadurch gekennzeichnet,**
daß mindestens ein Teil einer aus Kupplung (19 bzw. 18) und Gegenkupplung (33 bzw. 42) bestehenden Anordnung mit einem schwingungsdämpfenden Überzug (46) aus elastomerem Werkstoff versehen ist.

## Claims

1. A multi-purpose kitchen appliance having at least a first (50) and a second (28) driven shaft driven by an electric motor at different speeds and mounted concentrically with each other in the appliance housing (3), whereof each shaft (50, 28) carries a coupling means (18, 19), with the first coupling means (18) being adapted to be connected to a first mating coupling means (42), and the second coupling means (19) being adapted to be connected to a second mating coupling means (33), in which, further, the first mating coupling means (42) is arranged on the outside of the bottom (53) of a first processing container (4) and the second mating coupling means (33) is arranged on the outside of the bottom (54) of a second processing container (52), said containers being each removable from the housing (3) and, on being placed down on the housing (3), having their respective mating coupling means (42, 33) in engagement with the associated coupling means (18, 19) by means of teeth (45 and 37, respectively) meshing with teeth (22 and 29, respectively), with processing tools (13, 47) for processing food materials being insertable into the respective processing containers (4, 52), said tools being driven through the respective mating coupling means (42, 33), with an outwardly extending ring structure (21 and 25, respectively) being provided at the upper end of the driven shaft (50 and 28, respectively) protruding from the housing (3) of the multi-purpose kitchen appliance, said ring structures being superposed upon each other in relation to the driven shafts (50, 28) and being of different diameters, with the lower ring structure (25) proximal to the housing (3) having the greater diameter,
**characterized in that** the ring structures (21, 25) are of a disk-shaped configuration, that the teeth (22 and 29, respectively) of the coupling means (18 and 19, respectively) extend from the ring upper sides in an upward direction, and that the upper ring structure (21) with its teeth (22) has a substantial portion thereof received within the rim of the teeth (29) of the lower ring structure (25).

2. The kitchen appliance as claimed in claim 1,
**characterized in that** the surfaces of rotation of the coupling means and the mating coupling means (18, 19, 33, 42) are configured as the outer surface of the frustum of a cone.

3. The kitchen appliance as claimed in claim 2,
**characterized in that** the teeth (22, 29) of the coupling means (18, 19) are arranged on the convexly curved outside of the surfaces of rotation, and the teeth (37, 45) of the mating coupling means (33, 42) are arranged on the concavely curved inside of the surfaces of rotation.

4. The kitchen appliance as claimed in claim 1,
**characterized in that** the coupling means (18, 19) and the mating coupling means (42, 33) are configured as dog couplings or toothed couplings suitable for relative axial engagement.

5. The kitchen appliance as claimed in claim 4,
**characterized in that** the coupling means (18, 19) and the mating coupling means (42, 33) of the toothed couplings have three or more teeth (22, 29, 37, 45) arranged on an essentially radially extending surface of rotation and equally spaced apart from the axis of rotation and from each other, with the torgue-transmitting surfaces (23, 30, 38, 59) of said teeth lying in radial planes in which the axis of rotation lies.

6. The kitchen appliance as claimed in claim 5,
**characterized in that,** in a tangential direction, the teeth (22, 29, 37, 45) of the coupling halves are of a cross-section shaped in the form of a rectangular triangle having its right angle at the base of the torque-transmitting surfaces (23, 30, 38, 59) of the teeth.

7. The kitchen appliance as claimed in claim 1,
**characterized in that** the inner coupling means (18) transmits higher output speeds.

8. The kitchen appliance as claimed in claim 1,
**characterized in that** the force transmission between the mating coupling means (42, 33) and the processing tool (13, 47) is effected by a respective tool shaft (7, 55) mounted in the respective processing container (4, 52).

9. The kitchen appliance as claimed in claim 8,
**characterized in that** the tool shaft (7, 55) is mounted and sealed in a tube section (5, 56) extending from the bottom of the respective processing container (4, 52) into the interior of the container up to about half the filling level.

10. The kitchen appliance as claimed in claim 2,
**characterized in that** the tube section (5, 56) includes a base portion (6, 66) widening conically towards the container bottom (53, 54), and that said widened portion (6, 66) accommodates therein the mating coupling means (42 and 33, respectively).

11. The kitchen appliance as claimed in claim 3,
**characterized in that** also the first (18) and the second (19) coupling means extend into the widened portion (6, 66) as the respective processing container (4, 52) is seated in place.

12. The kitchen appliance as claimed in any one of the claims 2 to 9,
**characterized in that** the coupling means and the mating coupling means (18, 19, 33, 42) of the toothed couplings are injection-molded plastic parts, with the dogs or teeth producing on their sides close to the surface of rotation recesses (32) formed by core sections in the injection mold.

13. The kitchen appliance as claimed in any one of the preceding claims,
**characterized in that** an arrangement comprised of coupling means (19 and 18, respectively) and mating coupling means (33 and 42, respectively) has at least a portion thereof provided with a vibration-damping coating (46) of an elastomer material.

## Revendications

1. Robot de cuisine à multiples fonctions comportant au moins un premier arbre mené (50) et un second arbre mené (28) entraînés par un moteur électrique à différentes vitesses de rotation et montés concentriquement l'un à l'autre dans leur boîtier (3), dont chacun (50, 28) porte un accouplement (18, 19), le premier accouplement (18) pouvant être relié à un premier accouplement complémentaire (42) et le second accouplement (19) à un second accouplement complémentaire (33), et le premier accouplement complémentaire (42) étant agencé sur la face extérieure du fond (53) d'un premier récipient de travail (4) et le second accouplement complémentaire (33) sur la face extérieure du fond (54) d'un second récipient de travail (52), que l'on peut enlever à leur tour du boîtier (2) et qui s'engagent lors de la mise en place sur le boîtier (2) avec leur accouplement complémentaire respectif (42, 33) via des dentures (45 ou 37) dans des dentures (22 ou 29) de l'accouplement associé (18, 19), et on peut mettre en place dans les récipients de travail respectifs (4, 52) des outils de travail (13, 47) pour traiter des denrées alimentaires, lesdits outils étant entraînés via l'accouplement complémentaire respectif (42, 33), et on agence à l'extrémité supérieure des arbres menés (50, 28), qui dépasse hors du boîtier (2) du robot de cuisine à multiples fonctions, une bague (21, 25) respective qui s'étend vers l'extérieur, ces bagues étant superposées par rapport aux arbres menés (50, 28) et présentant différents diamètres, la bague inférieure (25) située plus proche du boîtier (3) présentant le plus grand diamètre, caractérisé en ce que les bagues (21, 25) sont réalisées en forme de disque, en ce que la denture (22 ou 29) de l'accouplement correspondant (18, 19) s'étend respectivement depuis leur face supérieure vers le haut, et en ce que la bague supérieure (21) est logée avec ses dents (22) en partie importante à l'intérieur de la couronne des dents (29) de la bague inférieure (25).

2. Robot de cuisine selon la revendication 1, caractérisé en ce que les surfaces de rotation des accouplements et des accouplements complémentaires (18, 19, 33, 42) sont réalisées sous forme de surface enveloppe d'un tronc de cône.

3. Robot de cuisine selon la revendication 2, caractérisé en ce que les dents (22, 29) des accouplements (18, 19) sont agencées sur la face extérieure convexe des surfaces de rotation et les dents (37, 45) des accouplements complémentaires (33, 42) sont agencées sur la face intérieure concave des surfaces de rotation.

4. Robot de cuisine selon la revendication 1, caractérisé en ce que les accouplements (18, 19) et les accouplements complémentaires (42, 33) sont réalisés sous forme d'accouplements à griffe ou à denture frontale qui peuvent être engagés axialement l'un avec l'autre.

5. Robot de cuisine selon la revendication 4, caractérisé en ce que les accouplements (18, 19) et les accouplements complémentaires (42, 33) des accouplements à denture frontale présentent, sur une surface de rotation s'étendant sensiblement radialement, trois dents ou plus (22, 29, 37, 45) agencées à distance égale de l'axe de rotation et à distance égale les unes des autres, dont les surfaces de transmission (23, 30, 38, 50) pour le couple de rotation sont situées dans des plans radiaux contenant l'axe de rotation.

6. Robot de cuisine selon la revendication 5, caractérisé en ce que les dents (22, 29, 37, 45) des moitiés d'accouplements présentent en direction tangentielle en section transversale la forme d'un triangle rectangle, dont l'angle droit se trouve au pied des surfaces de transmission (23, 30, 38, 59) des dents.

7. Robot de cuisine selon la revendication 1, caractérisé en ce que l'accouplement intérieur (18) transmet des vitesses de rotation plus élevées.

8. Robot de cuisine selon la revendication 1, caractérisé en ce que la transmission de force entre l'accouplement complémentaire (42, 33) et l'outil de travail (13, 47) s'effectue respectivement par un arbre d'outil (7, 55) monté dans un récipient de travail correspondant (4, 52).

9. Robot de cuisine selon la revendication 8, caractérisé en ce que l'arbre d'outil (7, 55) est monté et étanché dans un talon tubulaire (5, 56) qui s'étend depuis le fond du récipient de travail respectif (4, 52) jusqu'à environ la moitié de la hauteur de remplissage dans la chambre intérieure du récipient.

10. Robot de cuisine selon la revendication 2, caractérisé en ce que le talon tubulaire (5, 56) présente un pied (6, 66) qui va en s'élargissant coniquement vers le fond de récipient (53, 54), et en ce que les accouplements complémentaires (42 ou 33) sont agencés dans cet élargissement (6, 66).

11. Robot de cuisine selon la revendication 3, caractérisé en ce que lors de la mise en place du récipient de travail respectif (4, 52), le premier accouplement (18) et le second accouplement (19) pénètrent également dans l'élargissement (6, 66).

12. Robot de cuisine selon l'une quelconque des revendications 2 à 9, caractérisé en ce que les accouplements et les accouplements complémentaires (18, 19, 33, 42) des accouplements à denture frontale sont fabriqués en matière plastique par un procédé à injection, les griffes ou les dents provoquant des évidements (32) sur leur face orientée vers la surface de rotation par des parties de noyau formées dans le moule d'injection.

13. Robot de cuisine selon l'une quelconque des revendications précédentes, caractérisé en ce qu'au moins une partie d'un agencement constitué par l'accouplement (19 ou 18) et par l'accouplement complémentaire (33 ou 42) est pourvue d'un revêtement (46) en un matériau élastomère amortissant les vibrations.
